# EUROPÄISCHE PATENTSCHRIFT

(11) **EP 1 555 118 B1**
(45) Veröffentlichungstag und Bekanntmachung des Hinweises auf die Patenterteilung: **06.07.2016**
(21) Anmeldenummer: 04029626.1
(22) Anmeldetag: 15.12.2004
(51) Int. Cl.: B32B 9/02, B32B 9/04, B32B 5/18, B32B 5/24, D06N 3/00, B60R 13/02

(54) **Leder- oder Lederähnliches Verbundmaterial**
Leather or leather-like laminate
Matériau multicouche en cuir ou simili-cuir

(30) Priorität: 15.01.2004 DE 102004002381
(43) Veröffentlichungstag der Anmeldung: 20.07.2005
(73) Patentinhaber: Zoeppritex-Verbundstoffe Gmbh & Co. KG, 89547 Gerstetten-Heldenfingen (DE)
(72) Erfinder: Moning, Ernst-Wolfgang, 89129 Langenau (DE); Zwissler, Ulrich, Dr., 89547 Gerstetten (DE)
(74) Vertreter: Rüger, Barthelt & Abel

(56) Entgegenhaltungen:
- DE-A1- 19 845 735
- US-A- 4 445 954
- US-A- 5 403 884

## Beschreibung

Die Erfindung betrifft ein Leder oder lederähnliches Verbundmaterial, das insbesondere zum Einsatz im Automobilbereich und hier insbesondere als Polstermaterial für Fahrzeugsitze bestimmt ist. Außerdem betrifft die Erfindung ein Verfahren zur Herstellung dieses Materials und die Verwendung des Materials für Anwendungszwecke im Automobilbereich und hier insbesondere als Bezugsmaterial für Fahrzeugsitze.

Insbesondere bei hochwertigen Personenkraftfahrzeugen werden im Automobilbereich zunehmend Fahrzeugsitze angeboten, die mit echtem Leder bezogen sind. Dazu ist es bekannt Leder zu verwenden, das auf seiner Fleisch- oder Rückseite eine aufkaschierte Schicht aus einem Weichschaumstoff trägt, die die Polsterungseigenschaften verbessert und den Sitzkomfort erhöht. Der Schaumstoff ist in der Regel ein Polyurethan (PUR)-Weichschaumstoff sowohl auf Ether- als auch auf Esterbasis. Wegen der adhäsiven ("blockigen") Eigenschaften der Weichschaumstoffoberfläche kann Leder, das auf seiner Rückseite nur mit Weichschaumstoff beschichtet ist, auf den gebräuchlichen Nähmaschinen nicht ohne Weiteres verarbeitet werden. Es wird deshalb die Außenseite der Weichschaumstoffschicht mit einer aufkaschierten Textilgewebebahn versehen, die die Gleitfähigkeit der Rückseite des so geschaffenen Lederverbundmaterials erhöht, so dass dieses leichter verarbeitet werden kann. Gleichzeitig ist diese Gleitfähigkeit auch für einen Sitzbezug von Bedeutung, weil der Sitzbezug sich damit gegenüber der Polsterung bei einer im Gebrauch auftretenden elastischen Verformung in dem erforderlichen Maße verschieben kann.

In der Praxis wird bei der Herstellung des erläuterten Lederverbundmaterials für Sitzbezüge häufig in der Weise vorgegangen, dass eine PUR-Weichschaumstoffschicht auf einer Seite beflammt wird, um den Schaumstoff anzuschmelzen, worauf in den durch die Wärmeeinwirkung flüssig gewordenen Schaumstoff ein Textilgewebe eingebettet wird. Nachteilig bei diesem Verfahren ist, dass PUR-Schaumstoff verbrannt wird, wodurch schädliche Emissionen freigesetzt werden. Außerdem neigt mit einer solchen sogenannten Flammkaschierung behandelter Schaumstoff zum Ausdünsten von Schadstoffen, auch "Fogging" genannt, was bedeutet, dass von ihm eine gewisse Geruchsbelästigung ausgeht.

*Aus der* DE 198 45 735 A1 *ist eine Echtlederverkleidung für ein Fahrzeug-Innenausstattungsteil bekannt, die eine außen liegende Lederschicht, eine dem Innenausstattungsteil zugewandte Vliesschicht* und *eine dazwischen liegende Schicht aus Spaltschaumstoff aufweist, die mit der Vliesschicht durch Flammkaschieren verbunden ist. Außerdem ist aus der* US-A 4445954 *ein Verfahren zur Herstellung von gepolsterten Innenauskleidungspanelen von Kraftfahrzeugen, Flugzeugen und dergleichen bekannt, bei dem zunächst ein Panelsubstrat erzeugt wird,* das *einen Kern aus non-woven Textilfasern aufweist, auf* denen *beidseitig jeweils eine Schicht aus verwebten oder nicht verwebten unter Wärmeeinwirkung schmelzbaren synthetischen Fasern aufgebracht ist. Die* aus *Außenschichten und der Kernschicht bestehende* Sandwichstruktur wird unter Verwendung gebräuchlicher Vernadelungstechniken zusammengenadelt. Auf das Panelsubstrat wird auf der Schauseite sodann eine Schaumstoffschicht durch Flammkaschieren aufgebracht, die eine dekorative Schicht aus einem Gestrick, Gewirk oder aus Echtleder, etc., trägt. Nach der Vorformung wird das Ganze in einer Form unter Wärme und Druckeinwirkung verpresst.

Davon abgesehen, besteht ein grundsätzliches Problem bei der Verwendung des bekannten Lederverbundstoffs mit Textilbeschichtung auf der Außenseite der Weichschaumstoffschicht darin, dass das auf die Außenseite der Schaumstoffschicht aufkaschierte Textilmaterial eine andere Dehnfähigkeit wie die Lederschicht des Verbundmaterials aufweist. Die zur Zeit auf dem Markt befindlichen Textilstoffe, die zur Kaschierung verwendet werden, bringen nicht die Dehnungswerte in Längs- und Querrichtung auf, die bei den heute eingesetzten Sitzformen und dazu verwendeten Lederarten erforderlich sind. Bei einer im Vergleich zu dem Leder zu geringen Dehnbarkeit der Textilmaterialschicht in dem Verbundmaterial wird das Leder gestaucht, wenn das lederkaschierte Verbundmaterial zur Lederseite hin eingerollt oder auch nur verbogen wird. Dieses Stauchen macht sich bei einem Automobilsitz durch Falten in der Lederoberfläche bemerkbar. Weil die Textilgewebebeschichtung der Außenseite der PUR-Weichschaumstoffschicht mit Rücksicht auf die Erzielung der für die Verwendung des Verbundmaterials erforderlichen Gleitfähigkeit unerlässlich war, mussten die damit verbundenen Probleme der Faltenbildung des Leders beim Dehnen oder Verbiegen in Kauf genommen werden.

Aufgabe der Erfindung ist es deshalb hier abzuhelfen und ein Lederoder lederähnliches Verbundmaterial zu schaffen, das eine auf die Lederrückseite aufkaschierte Weichschaumstoffschicht trägt, die auf Ihrer Außenseite so behandelt ist, dass sie die für die Verarbeitung und den Einsatz, bspw. bei Polstermöbeln erforderliche Gleitfähigkeit aufweist und gleichzeitig den Problemen der Faltenbildung des Leders bei Dehnung oder Biegung abhilft.

Zur Lösung dieser Aufgabe trägt erfindungsgemäß das Leder oder lederähnliche Material auf seiner Rückseite eine aufkaschierte Schicht aus einem Weichschaumstoff, die auf ihrer Außenseite, mit einer Schicht miteinander unverbundener textiler Stapelfasern beflockt ist, wobei die Stapelfasern an dem Weichschaumstoff an diskreten voneinander getrennten Klebstellen angeklebt sind.

Da die Rückseite des so geschaffenen neuen Lederverbundmaterials durch ein Textilmaterial gebildet ist, das keine Querverbindungen aufweist, wie sie etwa durch die sich kreuzenden Garnsysteme (Kette und Schuss) bei einem Gewebe gegeben und auch bei einem Gestrick vorhanden sind, zeichnet sich das auf das Leder oder lederähnliche Material aufkaschierte System durch eine extrem hohe Elastizität aus, das alle praktisch vorkommenden verschiedenen Biegeradien des Leders ausgleicht, so dass eine Faltenbildung ausgeschlossen ist. Die einzelnen Fasern der textilen Stapelfaserschicht sind an einzelnen Klebstoffpunkten, die zwar sehr dicht aneinander liegen, aber voneinander unabhängig sind, an der Weichschaumstoffschicht befestigt, so dass durch die lose Anordnung der miteinander unverbundenen Stapelfasern keinerlei Steifigkeit in den Gesamtverbund des Systems eingeführt wird. Gleichzeitig ergibt aber die textile Stapelfaserschicht eine hervorragende Gleitfähigkeit der Rückseite des neuen Lederverbundmaterials auf allen Kunststoffen, Metallen, Lacken und Polstermaterialien.

Als Stapelfasern können sowohl synthetische als auch natürliche Fasern, wie auch Mischungen aus solchen Fasern verwendet werden, die zumindest teilweise eine vorbestimmte Stapellänge und einen vorgewählten Fasertiter aufweisen. Die Stapellänge und der Fasertiter sind den Anforderungen des jeweiligen Einsatzzweckes des Verbundmaterials angepasst.

Als Weichschaumstoff wird für das neue Verbundmaterial Polyurethan (PUR)-Weichschaumstoff bevorzugt, der auf der Schichtaußenseite offen- und/oder geschlossenporig sein kann. Es sind aber auch andere synthetische Schaumstoffe, bspw. auf Polyesterbasis denkbar.

Als Leder kann an sich jede ausreichend biegsame und dehnbare Lederqualität, unabhängig von dem jeweils verwendeten Gerbverfahren, benutzt werden, wobei insbesondere solche Lederqualitäten bevorzugt werden, die für den Einsatz als Polsterbezugsmaterial infrage kommen. Zu lederähnlichen Materialien zählen Materialien, die sich durch ähnliche Gebrauchseigenschaften und Einsatzmöglichkeiten wie echtes Leder auszeichnen. Sie können bspw. aus Lederresten oder -abfällen hergestellt sein und/oder auch in Form eines Kunstleders vorliegen.

Das beschriebene neue Leder- oder lederähnlichen Verbundmaterial, das auf seiner Rückseite eine aufkaschierte Schicht aus einem Weichschaumstoff trägt, die auf ihrer Außenseite mit einer Schicht miteinander unverbundener textiler Stapelfasern beflockt ist, kann erfindungsgemäß mit einem Verfahren hergestellt werden, bei dem auf die Rückseite eines Leders oder eines lederähnlichen Material eine Schicht aus einem Weichschaumstoff aufkaschiert wird, die auf ihrer dem Leder oder dem lederähnlichen Material abgewandten Außenseite eine Schicht aus miteinander unverbundenen textilen Stapelfasern trägt, die in einem vorhergehenden Verfahrensschritt aufgebracht worden sind. Die Weichschaumstoffschicht wird auf ihrer Außenseite mit textilen Stapelfasern beflockt, die an diskreten voneinander getrennten Klebestellen an den Weichschaumstoff angeklebt werden. Dazu kann die mit der Stapelfaserschicht zu versehende Oberseite des Weichschaumstoffs mit einem Klebstoff besprüht und dann beflockt werden. Die Weichschaumstoffschicht kann nach der Beflockung auf ihrer der Beflockung abgewandten Seite mit einem Klebemittel versehen und anschließend mit dem Leder oder lederähnlichem Material verklebt werden.

Das im Vorstehenden beschriebene neue Lederverbundmaterial ist an sich allgemein verwendbar, doch ist es aufgrund seiner besonderen Eigenschaften insbesondere für einen Einsatz im Automobilbereich geeignet. Dort kann es zur Bespannung von Karosserieteilen oder als Bezugsmaterial für Automobilsitze verwendet werden. Diese Sitze sind nämlich im Gebrauch einer besonders hohen Beanspruchung ausgesetzt, weil der Fahrer oder Beifahrer auf einem solchen Sitz eine eng eingepresste Sitzposition einnimmt, in der er von dem Sitz seitlich geführt und gleichzeitig durch die Sicherheitsgurte fixiert ist.

Weitere Ausgestaltungen der Erfindung ergeben sich aus den Unteransprüchen.

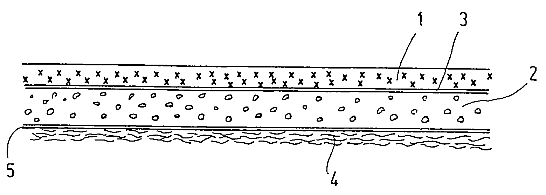

Die Figur zeigt ein schematisches Querschnittsbild eines erfindungsgemäßen Lederverbundmaterials.

Das schematische Querschnittsbild des neuen Lederverbundmaterials weist eine obere oder Deckschicht 1 aus Leder oder einem lederähnlichen Material auf. Auf seine Fleisch- oder Rückseite ist eine Schicht 2 aus einem Weichschaumstoff, vorzugsweise aus einem Polyurethan (PUR)-Weichschaumstoff unter Zwischenlage einer Schicht 3 aus einem thermoplastischen Klebstoff aufkaschiert. Auf seiner der Lederschicht 1 abgewandten Außenseite ist die Weichschaumstoffschicht 2 mit textilen Stapelfasern beflockt, die eine bei 4 angedeutete verhältnismäßig dünne Schicht bilden, die den Weichschaumstoff vollständig abdeckt. Die Stapelfasern der Stapelfaserschicht 4 sind mit dem Weichschaumstoff im Bereiche einer Klebstoffschicht 5 derart verbunden, dass die Stapelfasern miteinander unverbunden sind.

Bei einer Biegung oder Dehnung des Lederverbundmaterials kann die Weichschaumstoffschicht 2 Formänderungen, wie einer Dehnung oder Biegung der Schicht 1 aus Leder oder lederähnlichem Material eng folgen, ohne durch die auf ihre Außenseite aufgebrachte Beflockung in der Stapelfaserschicht 4 in irgendeiner Weise behindert zu sein. Damit wird verhindert, dass ein Biegen des Verbundmaterials zu einer Faltenbildung auf der Vorderseite des Leders oder lederähnlichen Materials der Schicht 1 führt. Gleichzeitig bietet die Beflockung eine textile Oberfläche auf der Rückseite des Verbundmaterials, die sich durch gute Gleiteigenschaften auszeichnet, so dass das Material auf Nähmaschinen ohne Weiteres verarbeitet werden kann und bei der Verwendung als Bezugsstoff für Polstermöbel, insbesondere Automobilsitze, die für diesen Zweck erforderliche Gleitfähigkeit aufweist.

Der Weichschaumstoff der Schicht 2 ist, wie erwähnt, vorzugsweise PUR-Weichschaumstoff sowohl auf Ether- als auch auf Esterbasis. Er wird in der Regel als aus einem "Langblock" gespaltene, endlos verklebte Ware verarbeitet. Die Dicke kann je nach dem beabsichtigten Verwendungszweck zwischen etwa 1,5 mm bis zu 100 mm oder mehr variieren. Die Breite ist nach unten (außer durch wirtschaftliche Faktoren) nicht begrenzt nach oben zu sind die Grenzen durch die Herstellbreite des PUR-Weichschaumstoffmaterials bestimmt, die derzeit maximal etwa 220 cm beträgt.

Die Stapelfasern der Stapelfaserschicht 4 können synthetische Fasern sein, z.B. Polyamid, Polyester, Copolyamid, Copolyester, etc. Es können aber auch natürliche Fasern sein, z.B. Baumwoll-, Viskose-, Zellulosefasern und dergleichen. Auch Mischungen solcher Fasern sind denkbar.

Die Fasern werden für den jeweiligen Einsatzzweck auf eine definierte Stapellänge geschnitten, auch wird der Fasertiter zweckentsprechend definiert.

Die Herstellung des in der Figur dargestellten Verbundmaterials kann in folgender Weise geschehen:
In einem ersten Verfahrensschritt wird der die Schicht 2 bildende Weichschaumstoff auf einer Seite mit einem Klebstoff besprüht. Verwendet werden können Klebstoffe auf Lösemittelbasis wie auch solche, die in Form wasserlöslicher Dispersionen vorliegen. Aufgrund ihrer geringeren Toxizität für Mensch und Umwelt haben sich in den letzten Jahren die lösungsmittelfreien Klebstoffe stärker durchgesetzt. Nach dem Aufsprühen braucht der Klebstoff eine bestimmte offene Zeit, um den aufgebrachten Stapelfasern, die abschließend die Oberfläche darstellen werden, Zeit zu geben, teilweise in die Klebstoffmatrix einzudringen und dort eine chemische und/oder mechanische Verbindung mit dem Klebstoff herzustellen. Dadurch dass der Klebstoff auf den Weichschaumstoff aufgesprüht wird, wird erreicht, dass die Stapelfasern an einzelnen Klebstoffpunkten, die sehr dicht beieinander liegen, aber zugleich unabhängig voneinander sind an dem Weichschaumstoff verankert werden, so dass durch ihre lose miteinander unverbundenen Anordnung keine Steifigkeit in dem Gesamtverbund des Systems erzeugt wird.

Alternativ kann der Klebstoff naturgemäß auch mit einem anderen zweckentsprechenden Verfahren, etwa mittels Walzen oder Rakeln aufgebracht werden. Vermieden werden muss nur, dass der Klebstoff eine zusammenhängende mehr oder minder biegesteife oder dehnungsarme Schicht bildet, die die Verformbarkeit oder Dehnbarkeit des Verbundmaterials beeinträchtigt.

In einem zweiten Verfahrensschritt wird nach dem Besprühen des Schaumstoffs mit Klebstoff eine elektrische Ladung auf die Oberfläche des eine gewisse Leitfähigkeit aufweisenden Klebstoffs aufgebracht. Sodann werden die eine gewisse elektrostatische Aufladbarkeit besitzenden Fasern im elektrischen Feld auf den Weichschaumstoff aufgesetzt, wobei sie im elektrischen Feld so beschleunigt werden, dass sie in den Klebstoff etwas eingeschossen werden, wobei ein Zusammenkleben der Fasern aber verhindert wird. Vor dem Auftreffen fliegen die Stapelfasern durch ein Richtgitter, so dass sie ausgerichtet in Längsrichtung auf die elektrisch geladene Klebstoffoberfläche auftreffen und sich mit einem Ende in der Klebstoffmasse verankern. Grundsätzlich kann das Verfahren auch so durchgeführt werden, dass die Fasern unter einem vorbestimmten Winkel kleiner 90° zu der Schaumstoffoberfläche ausgerichtet sind.

Elektrostatische Beflockungsverfahren und -anlagen sind an sich bekannt (vgl. bspw. Einführung in die Kunststoffverarbeitung - Prof. Dr.-Ing. Georg Menges Karl Hanser Verlag München-Wien 1975). Sie werden zur optischen Aufwertung von Kunststoffoberflächen (z.B. Kugelschreiber in Displayverpackung), zur optischen Aufwertung von Schaumstoffverpackungen (z.B. Schmuckschatullen)) und zur Erzielung von besonderen, insbesondere preisgünstigen Oberflächeneffekten verwende, um nur einige Einsatzgebiete zu erwähnen.

Auf die der Beflockung abgewandte Oberseite der Weichschaumstoffschicht 3 kann in einem weiteren Verfahrensschritt ein Klebemittel aufgebracht werden, dass insbesondere aus einem thermosplastischen Klebstoff besteht, der sowohl als Pulver aufgestreut und angesintert werden oder mittels Düsen-, Walzen- oder Rakelverfahren aufgebracht wird. Auch Klebstofffolien, Klebewebs und viele andere bekannte Klebstoffsysteme können Verwendung finden. Auf das die Klebstoffschicht 3 bildende Klebstoffsystem wird schließlich das Leder oder lederähnliche Material 1 aufkaschiert.

## Patentansprüche

1. Leder- oder lederähnliches Verbundmaterial, das auf seiner Rückseite eine aufkaschierte Schicht aus einem Weichschaumstoff trägt, die auf ihrer Außenseite mit einer Schicht miteinander unverbundener textiler Stapelfasern beflockt ist, wobei die Stapelfasern an dem Weichschaustoff an diskreten voneinander getrennten Klebestellen angeklebt sind.

2. Verbundmaterial nach Anspruch 1, **dadurch gekennzeichnet, dass** die Stapelfasern im Wesentlichen gleich ausgerichtet sind.

3. Verbundmaterial nach einem der vorhergehenden Ansprüche, **dadurch gekennzeichnet, dass** die Stapelfasern, zumindest teilweise, eine vorbestimmte Stapellänge aufweisen.

4. Verbundmaterial nach einem der vorhergehenden Ansprüche, **dadurch gekennzeichnet, dass** die Stapelfasern natürliche Fasern sind.

5. Verbundmaterial nach einem der Ansprüche 1 bis 3, **dadurch gekennzeichnet, dass** die Stapelfasern synthetische Fasern sind.

6. Verbundmaterial nach den Ansprüchen 4 und 5, **dadurch gekennzeichnet, dass** die Stapelfaserschicht natürliche und synthetische Fasern enthält.

7. Verbundmaterial nach einem der vorhergehenden Ansprüche, **dadurch gekennzeichnet, dass** das Weichschaummaterial aus Polyurethan (PUR) besteht.

8. Verfahren zum Herstellen eines Verbundmaterials, bei dem eine Weichschaumstoffschicht auf einer ihrer Außenseiten mit einer Schicht miteinander unverbundener textiler Stapelfasern beflockt wird wobei die Stapelfasern an diskreten voneinander getrennten Klebestellen an dem Weichschaumstoff angeklebt werden und bei dem die so beflockte Weichschaumstoffschicht sodann auf die Rückseite eines Leders oder lederähnliche Materials so aufkaschiert wird, dass ihre die Beflockung tragende Außenseite dem Leder oder lederähnlichen Material abgewandt ist.

9. Verfahren nach Anspruch 8, bei dem die mit der Stapelfaserschicht zu versehende Oberseite des Weichschaumstoffs mit einem Klebstoff besprüht und dann beflockt wird.

10. Verfahren nach Anspruch 8 oder 9, bei dem die Weichschaumstoffschicht nach der Beflockung auf ihrer der Beflockung abgewandten Seite mit einem Klebemittel versehen und anschließend mit dem Leder oder lederähnlichen Material verklebt wird.

11. Verwendung eines Leders oder lederähnlichen Materials nach einem der Ansprüche 1 bis 8 als Bezugsmaterial für Polstermöbel, insbesondere Automobilsitze.

## Claims

1. Leather or leather-like composite material, which on its backside is covered by a laminated layer of soft foam, which on its outside is flocked with a layer of textile staple fibers unconnected to one another, wherein the staple fibers are glued to the soft foam at discrete glue points that are separate from one another.

2. Composite material according to claim 1, **characterized in that** the staple fibers are essentially aligned uniformly.

3. Composite material according to any one of the above claims, **characterized in that** at least part of the staple fibers have a predetermined staple length.

4. Composite material according to any one of the above claims, **characterized in that** the staple fibers are natural fibers.

5. Composite material according to any one of claims 1 to 3, **characterized in that** the staple fibers are synthetic fibers.

6. Composite material according to claims 4 and 5, **characterized in that** the staple fiber layer contains natural and synthetic fibers.

7. Composite material according to any one of the above claims, **characterized in that** the soft foam material is comprised of polyurethane (PUR).

8. Method for manufacturing a composite material, in which a soft foam layer is flocked on one of its outsides with a layer of textile staple fibers unconnected to one another, wherein the staple fibers are glued to the soft foam material at discrete glue points that are separate from one another and in which the soft foam layer thus flocked is then laminated on the backside of a leather or leather-like material in such a way that its outside covered by the flocking is oriented away from the leather or leather-like material.

9. Method according to claim 8, wherein the surface of the soft foam to be provided with the staple fiber layer is sprayed with an adhesive and is then flocked.

10. Method according to claim 8 or 9, wherein after the flocking the side of the soft foam layer oriented away from the flocking has an adhesive applied to it and is then glued to the leather or leather-like material.

11. Use of a leather or leather-like material according to any one of claims 1 to 8 as a covering material for upholstered furniture, in particular automobile seats.

## Revendications

1. Matériau multicouche en cuir ou similicuir, qui porte sur sa face arrière une couche contrecollée en mousse souple, laquelle est floquée sur sa face externe avec une couche de fibres discontinues textiles non liées entre elles, sachant que les fibres discontinues sont collées à la mousse souple en des points de collage discrets séparés les uns des autres.

2. Matériau multicouche selon la revendication 1, **caractérisé en ce que** les fibres discontinues présentent sensiblement la même orientation.

3. Matériau multicouche selon l'une des revendications précédentes, **caractérisé en ce que** les fibres discontinues présentent, au moins en partie, une longueur de fibres discontinues prédéterminée.

4. Matériau multicouche selon l'une des revendications précédentes, **caractérisé en ce que** les fibres discontinues sont des fibres naturelles.

5. Matériau multicouche selon l'une des revendications 1 à 3, **caractérisé en ce que** les fibres discontinues sont des fibres synthétiques.

6. Matériau multicouche selon les revendications 4 et 5, **caractérisé en ce que** la couche de fibres discontinues comporte des fibres naturelles et synthétiques.

7. Matériau multicouche selon l'une des revendications précédentes, **caractérisé en ce que** le matériau de mousse souple est constitué de polyuréthane (PUR).

8. Procédé de fabrication d'un matériau multicouche, selon lequel une couche de mousse souple est floquée sur l'une de ses faces externes avec une couche de fibres discontinues textiles non liées entre elles, sachant que les fibres discontinues sont collées à la mousse souple en des endroits de collage discrets séparés les uns des autres, et selon lequel la couche de mousse souple ainsi floquée est ensuite contrecollée sur la face arrière d'un cuir ou d'un matériau similicuir, de façon telle que sa face externe portant le flocage se situe à l'opposé du cuir ou du matériau similicuir.

9. Procédé selon la revendication 8, selon lequel la face supérieure du matériau de mousse souple, devant être pourvue de la couche de fibres discontinues, est pulvérisée avec un adhésif et est ensuite floquée.

10. Procédé selon la revendication 8 ou 9, selon lequel, après le flocage, la couche de matériau de mousse souple est pourvue d'un adhésif, sur sa face éloignée du flocage, et est ensuite collée avec le cuir ou le matériau similicuir.

11. Utilisation d'un cuir ou d'un matériau similicuir selon l'une des revendications 1 à 8, en tant que matériau de revêtement pour des meubles rembourrés, en particulier des sièges automobiles.
